(19) Europäisches Patentamt
European Patent Office
Office européen des brevets

(11) Veröffentlichungsnummer: **0 170 905**
**B1**

(12) **EUROPÄISCHE PATENTSCHRIFT**

(45) Veröffentlichungstag der Patentschrift: **27.04.88**

(51) Int. Cl.⁴: **C 07 F 9/40**, C 07 F 9/32, A 01 N 25/32

(21) Anmeldenummer: **85108477.2**

(22) Anmeldetag: **09.07.85**

(54) **alpha-Acyloximino-alkanphosphon-(und-phosphin)-säureester, ihre Herstellung und Verwendung im Pflanzenschutz.**

(30) Priorität: **20.07.84 DE 3426718**

(43) Veröffentlichungstag der Anmeldung: **12.02.86 Patentblatt 86/7**

(45) Bekanntmachung des Hinweises auf die Patenterteilung: **27.04.88 Patentblatt 88/17**

(84) Benannte Vertragsstaaten: **AT BE CH DE FR GB IT LI NL**

(56) Entgegenhaltungen:
**EP-A-0 031 938**
**DE-A-2 504 319**

(73) Patentinhaber: **HOECHST AKTIENGESELLSCHAFT, Postfach 80 03 20, D-6230 Frankfurt am Main 80 (DE)**

(72) Erfinder: **Kehne, Heinz, Dr., Berliner Strasse 10, D-6238 Hofheim am Taunus (DE)**
Erfinder: **Mildenberger, Hilmar, Dr., Fasanenstrasse 24, D-6233 Kelkheim (Taunus) (DE)**
Erfinder: **Bauer, Klaus, Dr., Kolpingstrasse 7, D-6054 Rodgau (DE)**
Erfinder: **Bieringer, Hermann, Dr., Eichenweg 26, D-6239 Eppstein/Taunus (DE)**

EP 0 170 905 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue α-Acyloximinoalkanphosphon-(und-phosphin)-säureester der Formel

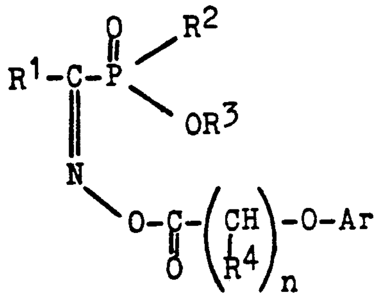

(I),

worin

$R^1$ $(C_1-C_8)$Alkyl, $(C_2-C_8)$Alkenyl, $(C_2-C_8)$Alkinyl, $(C_5-C_8)$-Cycloalkyl, Phenyl, Naphthyl, wobei der Alkyl-, Alkenyl-, Alkinyl-, Cycloalkyl-, Phenyl- oder Naphthylrest ein oder mehrfach durch Halogen, $(C_1-C_4)$Alkoxy, $(C_1-C_4)$Alkyl, Nitro, $CF_3$, Nitril, $(C_1-C_4$-Alkoxy)-carbonyl, gegebenenfalls durch $(C_1-C_4)$Alkyl und/oder Phenyl substituiertes Carbamoyl, $(C_1-C_6$-Alkyl)-carbonyl, $(C_1-C_6$-Alkyl)-carbonylamino, Benzoylamino, Di-$(C_1-C_4)$-Alkylamino oder durch einen gegebenenfalls ein- oder mehrfach durch Halogen, $(C_1-C_4)$Alkoxy, $(C_1-C_4)$Alkyl, Nitro, $CF_3$ oder Nitril substituierten Phenyl- oder Phenoxyrest substituiert sein kann, $(C_1-C_4$-Alkoxy)-carbonyl oder einen gegebenenfalls durch $(C_1-C_4)$Alkyl oder Phenyl substituierten Carbamoylrest,

$R^2$ $(C_1-C_4)$-Alkyl, $(C_1-C_4)$-Alkoxy oder Phenyl,

$R^3$ $(C_1-C_4)$-Alkyl,

$R^4$ H oder $(C_1-C_3)$-Alkyl,

Ar einen Phenyl-, Naphthyl- oder Chinolylrest, der jeweils bis zu dreifach durch Halogen und/oder ein- oder zweifach durch $CF_3$, $(C_1-C_4)$-Alkyl, $(C_1-C_4)$-Alkoxy, CN, $NO_2$, $(C_1-C_6$-Alkyl)-carbonyl oder Benzoyl substituiert sein kann, und

n 1, 2, 3 oder 4 bedeuten.

Halogen bedeutet im Falle des Restes Ar insbesondere Chlor.

Bevorzugt sind diejenigen Verbindungen der Formel I, in denen Verbindungen der Formel I, in denen

$R^1$ $(C_1-C_8)$Alkyl oder Phenyl, die jeweils wie oben angegeben substituiert sein können,

$R^2$ $(C_1-C_4)$-Alkoxy,

$R^4$ H oder Methyl,

Ar Phenyl, das durch ein bis drei Halogenatome substituiert sein kann, und

n 1 bedeuten.

Von den Verbindungen der Formel I seien beispielsweise genannt:

3,4-Dichlorphenoxyacetyloximino-phenylmethanphosphonsäurediethylester,
2,4-Dichlorphenoxyacetyloximino-phenylmethanphosphonsäurediethylester,
4-Chlorphenoxyacetyloximino-phenylmethanphosphonsäurediethylester
3-Chlorphenoxyacetyloximino-phenylmethanphosphonsäurediethylester,
4-Chlorphenyl-3,4-dichlorphenoxyacetyloximino-methanphosphonsäurediethylester,
4-Chlorphenyl-4-chlorphenoxyacetyloximino-methanphosphonsäurediethylester,
4-Chlorphenyl-3-chlorphenoxyacetyloximino-methanphosphonsäurediethylester,
1-(2,4-Dichlorphenoxyacetyloximino)-ethanphosphonsäurediethylester,
1-(3,4-Dichlorphenoxyacetyloximino)-ethanphosphonsäurediethylester,
1-(4-Chlorphenoxyacetyloximino)-ethanphosphonsäurediethylester,
1-(3-Chlorphenoxyacetyloximino)-ethanphosphonsäurediethylester,
1-(2,4-Dichlorphenoxyacetyloximino)-ethanphosphonsäuredimethylester,
3,4-Dichlorphenoxyacetyloximino-3-phenoxyphenyl-methanphosphonsäurediethylester,
4-Chlorphenoxyacetyloximino-3-phenoxyphenyl-methanphosphonsäurediethylester,
3-Chlorphenoxyacetyloximino-3-phenoxyphenyl-methanphosphonsäurediethylester,
2-Chlorphenyl-3,4-dichlorphenoxyacetyloximino-methanphosphonsäurediethylester,
4-Chlorphenoxyacetyloximino-4-methylphenyl-methanphosphonsäurediethylester,
1-(4-Chlorphenoxyacetyloximino)-hexanphosphonsäurediethylester,
1-(4-Chlorphenoxyacetyloximino)-butanphosphonsäurediethylester,
1-(3-Chlorphenoxyacetyloximino)-hexanphosphonsäurediethylester,
2-(4-Chlorphenoxy)-propionyloximino-4-chlorphenyl-methanphosphonsäurediethylester,

1-[2-(4-Chlorphenoxy)-propionyloximino]-ethanphosphonsäurediethylester,
1-[2-(4-Chlorphenoxy)-propionyloximino]-hexanphosphonsäurediethylester.

Gegenstand der vorliegenden Erfindung ist auch ein Verfahren zur Herstellung der Verbindungen der allgemeinen Formel I, dadurch gekennzeichnet, daß man

a) eine Verbindung der Formel II

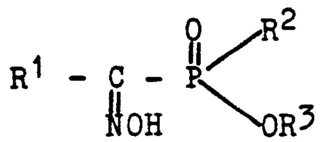

(II)

mit einer Verbindung der Formel III

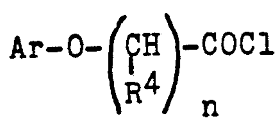

(III)

in Gegenwart einer Hilfsbase oder

b) eine Verbindung der Formel II mit einer Verbindung der Formel IV

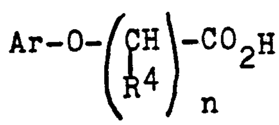

(IV)

in Gegenwart eines Kondensationsmittels umsetzt.

Die Verbindungen der Formel II sind bekannt: J. Org. Chem. 33, 3090 (1968), GB-PS-1 207 788 und DE-OS-25 53 442.

Die Verfahrensvariante a) führt man zweckmäßigerweise in einem inerten Verdünnungsmittel wie z. B. Tetrahydrofuran, Dioxan, Acetonitril, Chloroform, Toluol oder Dimethylformamid bei Temperaturen zwischen 0° C und 120° C, vorzugsweise zwischen 20° C und 80° C, in Gegenwart einer Hilfsbase aus.

Als Hilfsbasen eignen sich z. B. tertiäre organische Amine wie Triethylamin, Tributylamin oder N-Methylmorpholin, Pyridin oder Alkalimetallhydride wie Natriumhydrid, Alkalimetallalkoholate wie Natriumethanolat, Alkalimetallcarbonate wie Kaliumcarbonat, Alkalimetallhydroxide wie Natriumhydroxid, das in Pulverform als Suspension in einem inerten Verdünnungsmittel oder gelöst im Zweiphasensystem mit einem Phasentransferkatalysator wie Benzyltriethylammoniumchlorid eingesetzt werden kann.

Die Umsetzungen gemäß Variante b) werden in einem inerten Verdünnungsmittel wie z. B. Tetrahydrofuran, Dioxan, Dichlormethan, Chloroform, Dimethoxyethan, Essigsäureethylester oder einem Gemisch derselben bei Temperaturen zwischen -30° C und 50° C durchgeführt.

Als Kondensationsmittel kann beispielsweise ein Chlorameisensäureethylester oder ein Dialkylcarbodiimid wie Dicyclohexylcarbodiimid eingesetzt werden.

Die erfindungsgemäßen Oxime der Formel I können in zwei stereoisomeren Formen und zwar in der syn- oder anti-Form, vorliegen. Beide Formen sowie Gemische derselben werden von vorliegender Erfindung umfaßt. Die Isomeren können auf übliche Weise aus dem Stereoisomerengemisch erhalten werden.

Überraschenderweise wurde gefunden, daß Verbindungen der Formel I die Eigenschaften haben, phytotoxische Nebenwirkungen von Pflanzenschutzmitteln, insbesondere von Herbiziden, beim Einsatz in Nutzpflanzenkulturen zu vermindern oder ganz auszuschalten. Die erfindungsgemäßen Mittel können in Verbindung mit anderen Herbiziden ausgebracht werden und sind dann in der Lage, schädliche Nebenwirkungen dieser Herbizide zu antagonisieren und völlig aufzuheben, ohne die Wirksamkeit dieser Herbizide gegen Schadpflanzen zu beeinträchtigen. Solche Verbindungen, die die Eigenschaften besitzen, Kulturpflanzen gegen phytotoxische Schäden durch Herbizide zu schützen, werden "Antidote" oder "Safener" genannt.

Es sind bereits Oximether und -ester (DE-A-28 08 317) sowie Aryloxyacetonitrile und -amidoxine (EP-A-31 938 = US-A-4 414 020) als Safener-Verbindungen für Herbizide bekannt. Diese besitzen jedoch unzureichende Wirkungen.

Mit Hilfe der erfindungsgemäßen Verbindungen kann das Einsatzgebiet herkömmlicher Pflanzenschutzmittel ganz erheblich vergrößert werden. Gegenstand der vorliegenden Erfindung ist daher auch ein Verfahren zum Schutz von Kulturpflanzen gegen phytotoxische Nebenwirkungen von Pflanzenschutzmitteln, insbesondere Herbiziden, das dadurch gekennzeichnet ist, daß man die Pflanzen, Pflanzensamen oder Anbauflächen mit einer Verbindung der Formel I vor, nach oder vorzugsweise gleichzeitig mit dem Pflanzenschutzmittel behandelt.

Für die Anwendung können die Verbindungen der Formel I mit üblichen Formulierungshilfsmitteln zu Stäubemitteln, Spritzpulvern, Dispersionen, Emulsionskonzentraten usw. zubereitet werden, die entweder als solche angewendet werden (Stäubemittel, Pellets) oder vor der Anwendung in einem Lösungsmittel (Wasser) gelöst oder dispergiert werden.

Gegenstand der vorliegenden Erfindung sind daher auch pflanzenschützende Mittel, die die Verbindungen der Formel I enthalten.

Die Mittel können als Spritzpulver, emulgierbare Konzentrate, versprühbare Lösungen, Stäubemittel, Beizmittel, Granulate oder Mikrogranulate in den üblichen Zubereitungen angewendet werden.

Unter Spritzpulvern werden in Wasser gleichmäßig dispergierbare Präparate verstanden, die neben dem Wirkstoff außer gegebenenfalls einem Verdünnungs- oder Inertstoff noch Netzmittel, z. B. polyoxethylierte Alkylphenole, polyoxethylierte Fettalkohole, Alkyl- oder Alkylphenylsulfonate und Dispergiermittel, z. B. ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Ihre Herstellung erfolgt in üblicher Weise z. B. durch Mahlen und Vermischen der Komponenten.

Emulgierbare Konzentrate können z. B. durch Auflösen des Wirkstoffes in einem inerten organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt werden. Bei flüssigen Wirkstoffen kann der Lösungsmittelanteil ganz oder auch teilweise entfallen. Als Emulgatoren können beispielsweise verwendet werden: Alkylarylsulfonsaure Calciumsalze wie Ca-dodecylbenzolsulfonat, oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyglykolether, Sorbitanfettsäureester, Polyoxethylensorbitanfettsäureester oder Polyoxethylensorbitester.

Stäubemittel werden durch Vermahlen des Wirkstoffes mit fein verteilten, festen Stoffen, z. B. Talkum, natürlichen Tonen wie Kaolin, Bentonit, Pyrophillit oder Diatomeenerde erhalten.

Granulate können entweder durch Verdüsen des Wirkstoffes auf adsorptionsfähiges, granuliertes Inertmaterial hergestellt werden oder durch Aufbringen von Wirkstoffkonzentraten mittels Bindemitteln, z. B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration etwa 10 bis 90 Gew.-%; der Rest zu 100 Gew.-% besteht aus üblichen Formulierungsbestandteilen. Bei emulgierbaren Konzentraten kann die Wirkstoffkonzentration etwa 10 bis 80 Gew.-% betragen. Staubfähige Formulierungen enthalten meistens 5 bis 20 Gew.-% an Wirkstoff, versprühbare Lösungen etwa 1 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Konzentrate gegebenenfalls in üblicher Weise verdünnt, z. B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Herbizide, deren phytotoxische Nebenwirkungen mittels Verbindungen der Formel I herabgesetzt werden können, sind z. B. Carbamate, Thiolcarbamate, Halogenacetanilide, substituierte Phenoxy-, Naphthoxy- und Phenoxyphenoxycarbonsäurederivate sowie Heteroaryloxyphenoxycarbonsäurederivate wie Chinolyloxy-, Chinoxalyloxy-, Pyridyloxy-, Benzoxazolyloxy-, Benzthiazolyloxy-phenoxy-carbonsäureester und ferner Dimedonoximabkömmlinge. Bevorzugt hierin sind Phenoxyphenoxy- und Heteroaryloxyphenoxycarbonsäureester. Als Ester kommen hierbei insbesondere niedere Alkyl-, Alkenyl und Alkinylester in Frage.

Beispielsweise seien, ohne daß dadurch eine Beschränkung erfolgen soll, folgende Herbizide genannt:

A) Herbizide vom Typ der Phenoxyphenoxy- und Heteroaryloxy-phenoxycarbonsäure-($C_1$-$C_4$)alkyl-, ($C_2$-$C_4$)alkenyl- und ($C_3$-$C_4$)alkinylester wie
2-(2,4-Dichlorphenoxy)-phenoxy)-propionsäuremethylester,
2-(4-(4-Brom-2-chlorphenoxy)-phenoxy)-propionsäuremethylester,
2-(4-(4-Trifluormethylphenoxy)-phenoxy)-propionsäuremethylester,
2-(4-(2-Chlor-4-trifluormethylphenoxy)-phenoxy)-propionsäuremethylester,
2-(4-(2,4-Dichlorbenzyl)-phenoxy)-propionsäuremethylester,
4-(4-(4-Trifluormethylphenoxy)-phenoxy)-pent-2-en-säureethylester,
2-(4-(3,5-Dichlorpyridyl-2-oxy)-phenoxy)-propionsäureethylester,
2-(4-(3,5-Dichlorpyridyl-2-oxy)-phenoxy)-propionsäure-propargylester,
2-(4-(6-Chlorbenzoxazol-2-yl-oxy)-phenoxy)-propionsäureethylester,
2-(4-(6-Chlorbenzthiazol-2-yl-oxy)-phenoxy)-propionsäureethylester,
2-(4-(3-Chlor-5-trifluormethyl-2-pyridyloxy)-phenoxy)-propionsäuremethylester,
2-(4-(5-Trifluormethyl-2-pyridyloxy)-phenoxy)-propionsäurebutylester,

2-(4-(6-Chlor-2-chinoxalyloxy)-phenoxy)-propionsäureethylester,
2-(4-(6-Fluor-2-chinoxalyloxy)-phenoxy)-propionsäureethylester,
2-(4-(6-Chlor-2-chinolyloxy)-phenoxy)-propionsäureethylester,

B) Chloracetanilid-Herbizide wie
N-Methoxymethyl-2,6-diethyl-chloracetanilid,
N-(3'-Methoxyprop-2'-yl)-methyl-6-ethyl-chloracetanilid,
N-(3-Methyl-1,2,4-oxdiazol-5-yl-methyl)-chloressigsäure-2,6-dimethylanilid,

C) Thiolcarbamate wie
S-Ethyl-N,N-dipropylthiocarbamat oder
S-Ethyl-N,N-diisobutylthiocarbamat

D) Dimedon-Derivate wie
2-(N-Ethoxybutyrimidoyl)-5-(2-ethylthiopropyl)-3-hydroxy-2-cyclohexen-1-on,
2-(N-Ethoxybutyrimidoyl)-5-(2-phenylthiopropyl)-3-hydroxy-2-cyclohexen-1-on oder
2-(1-Allyloxyiminobutyl)-4-methoxycarbonyl-5,5-dimethyl-3-oxocyclohexenol.

Das Mengenverhältnis Antidot : Herbizid kann innerhalb weiter Grenzen, im Bereich zwischen 1 : 10 und 10 : 1, insbesondere zwischen 2 : 1 und 1 : 10, schwanken. Die jeweils optimalen Mengen an Herbizid und Antidot sind abhängig vom Typ des verwendeten Herbizids oder vom verwendeten Antidot sowie von der Art des zu behandelnden Pflanzenbestandes und lassen sich von Fall zu Fall durch entsprechende Versuche ermitteln.

Haupteinsatzgebiete für die Anwendung der Safener sind vor allem Getreidekulturen (Weizen, Roggen, Gerste, Hafer), Reis, Mais, Sorghum, aber auch Baumwolle, Zuckerrüben, Zukkerrohr und Sojabohne.

Die Safener der Formel I können je nach ihren Eigenschaften zur Vorbehandlung des Saatgutes der Kulturpflanze (Beizung der Samen) verwendet werden oder vor der Saat in die Saatfurchen eingebracht werden oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden, wobei die obengenannten Formulierungshilfsmittel verwendet werden können.

Die benötigten Aufwandmengen der Verbindungen der Formel können je nach Indikation innerhalb weiter Grenzen schwanken und variieren auch in Abhängigkeit von äußeren Bedingungen wie Bodenverhältnissen und Klimabedingungen. Im allgemeinen liegen sie jedoch zwischen 0,01 - 10 kg Wirkstoff/ha.

Die folgenden Beispiele dienen der weiteren Erläuterung der Erfindung.

**A. Formulierungsbeispiele**

a) Ein in Wasser leicht emulgierbares Konzentrat eines Antidots wird erhalten aus

| | |
|---|---|
| 25 Gew.-% | Verbindung der Formel I |
| 10 Gew.-% | Cyclohexanon |
| 50 Gew.-% | Xylol |
| 8 Gew.-% | dodecylbenzolsulfonsaurem Calcium |
| 4 Gew.-% | ethoxyliertem Rizinusöl (40 EO) |
| 3 Gew.-% | ethoxyliertem Nonylphenol (10 EO) |

Der Wirkstoff wird unter Rühren und leichtem Erwärmen in den angegebenen Lösungsmittelmengen gelöst und anschließend mit den Emulgatoren versetzt. Bei leicht erhöhten Temperaturen wird nachgerührt, bis die Lösung klar und frei von Schlieren ist.

b) Ein Wasser leicht emulgierbares Konzentrat aus einem Phenoxycarbonsäureester und einem Antidot (10 : 1) wird erhalten aus

| | |
|---|---|
| 12,00 Gew.-% | 2-[4-(6-Chlorbenzoxazol-2-yl-oxy)-phenoxy)-propionsäureethylester |
| 1,20 Gew.-% | Verbindung der Formel I |
| 69,00 Gew.-% | Xylol |
| 7,80 Gew.-% | dodecylbenzolsulfonsaurem Calcium |
| 6,00 Gew.-% | ethoxyliertem Nonylphenol (10 EO) |
| 4,00 Gew.-% | ethoxyliertem Rizinusöl (40 EO) |

Die Zubereitung erfolgt wie unter Beispiel a) angegeben.

c) Ein in Wasser leicht emulgierbares Konzentrat aus einem Phenoxycarbonsäureester und einem Antidot (1 : 10) wird erhalten aus

| | |
|---|---|
| 4,0 Gew.-% | 2-[4-(6-Chlorbenzoxazol-2-yl-oxy)-phenoxy]-propionsäureethylester |
| 40,0 Gew.-% | Verbindung der Formel I |
| 30,0 Gew.-% | Xylol |
| 20,0 Gew.-% | Cyclohexanon |
| 4,0 Gew.-% | dodecylbenzolsulfonsaurem Calcium |
| 2,0 Gew.-% | ethoxyliertem Rizinusöl (40 EO) |

Die Zubereitung erfolgt wie unter Beispiel a) angegeben.

## B. Chemische Beispiele

### Beispiel 1

4-Chlorphenoxyacetyloximino-4-chlorphenyl-methan-phosphonsäurediethylester

Zu einer Lösung von 17,5 g (0,06 mol) 4-Chlorphenyl-hydroximino-methanphosphonsäurediethylester und 7,2 g (0,072 mol) Triethylamin in 100 ml Toluol tropfte man unter Rühren 12,3 g (0,06 mol) 4-Chlorphenoxyacetylchlorid gelöst in 20 ml Toluol, wobei man die Temperatur durch gelegentliches Kühlen bei maximal 35°C hielt. Man rührte 7 h bei 60-65°C, kühlte ab, saugte ausgefallenes Triethylaminhydrochlorid ab und wusch die Toluolphase mit Wasser.

Nach dem Trocknen mit $Na_2SO_4$ entfernte man das Lösungsmittel am Rotationsverdampfer und kristallisierte aus n-Hexan/Diisopropylether (1 : 1) um. Man erhielt 25,6 g (92,8 %) 4-Chlorphenoxyacetyl-4-chlorphenyl-methanphosphonsäurediethylester vom Schmp. 67-70°C.

### Beispiel 2

1-[2-(4-Chlorphenoxy)propionyloximino]-hexanphosphonsäurediethylester

Zu einer Lösung von 10,0 g (0,04 mol) 1-Hydroximino-hexanphosphonsäurediethylester und 5,0 g (0,05 mol) Triethylamin in 80 ml Toluol tropfte man 8,8 g (0,04 mol) 2-(4-Chlorphenoxy)-propionylchlorid gelöst in 20 ml Toluol. Man rührte 9 h bei 55°C nach, kühlte ab, saugte ausgefallenes Triethylaminhydrochlorid ab und wusch die organische Phase mit Wasser. Nach dem Trocknen mit $Na_2SO_4$, Abdampfen des Toluols am Rotationsverdampfer und Entfernen von noch anhaftendem Lösungsmittel im Hochvakuum erhielt man 13,8 g (77,8 %) 1-[2-(4-Chlorphenoxy)-propionyloximino]-hexanphosphonsäurediethylester mit $n_D^{22} = 1{,}4919$.

Die nachfolgenden in Tabelle 1 aufgeführten Verbindungen der Formel I wurden in analoger Weise erhalten.

**Tabelle 1**

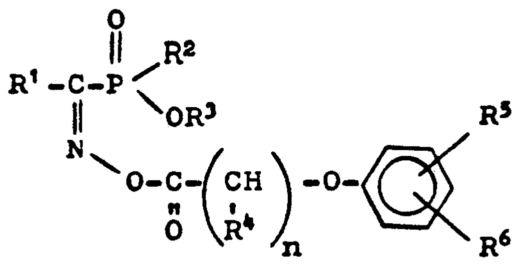

(I)

| Bsp. Nr. | $R^1$ | $R^2$ | $R^3$ | $R^4$ | $R^5$ | $R^6$ | n | Fp, $n_D^{20}$ |
|---|---|---|---|---|---|---|---|---|
| | 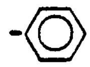 | $-OC_2H_5$ | $-C_2H_5$ | H | 4-Cl | H | 1 | 1,5504 |
| | 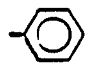 | $-OC_2H_5$ | $-C_2H_5$ | H | 2-Cl | 4-Cl | 1 | 1,5565 |
| | 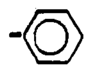 | $-OC_2H_5$ | $-C_2H_5$ | H | 3-Cl | 4-Cl | 1 | 1,5558 |
| | 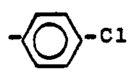 | $-OC_2H_5$ | $-C_2H_5$ | H | 3-Cl | H | 1 | 1,5565 |
| | 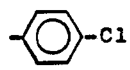 | $-OC_2H_5$ | $-C_2H_5$ | H | 2-Cl | 4-Cl | 1 | 1,5629 |
| | 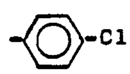 | $-OCH_3$ | $-CH_3$ | H | 2-Cl | 4-Cl | 1 | Öl |
| | 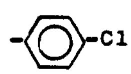 | $-OC_2H_5$ | $-C_2H_5$ | H | 3-Cl | 4-Cl | 1 | 1,5615 |
| | 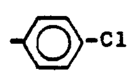 | $-OC_2H_5$ | $-C_2H_5$ | H | $4-CH_3$ | H | 1 | 1,5483 |
| | 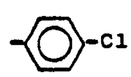 | $-OC_2H_5$ | $-C_2H_5$ | H | $2-CH_3$ | 4-Cl | 1 | 1,5549 |
| | 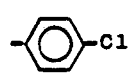 | $-OC_2H_5$ | $-C_2H_5$ | $-CH_3$ | 4-Cl | H | 1 | 1,5203 |
| | 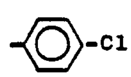 | $-OC_2H_5$ | $-C_2H_5$ | H | 4-Cl | H | 3 | Öl |
| 14 | 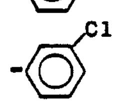 | $-OC_2H_5$ | $-C_2H_5$ | H | 4-Cl | H | 1 | Öl |
| 15 | 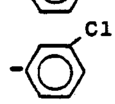 | $-OC_2H_5$ | $-C_2H_5$ | $-CH_3$ | 4-Cl | H | 1 | Öl |
| 16 | 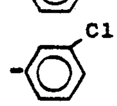 | $-OC_2H_5$ | $-C_2H_5$ | H | 4-Cl | H | 3 | Öl |
| 17 | 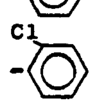 | $-OC_2H_5$ | $-C_2H_5$ | H | 4-Cl | H | 1 | 1,5519 |

| Bsp. Nr. | $R^1$ | $R^2$ | $R^3$ | $R^4$ | $R^5$ | $R^6$ | n | Fp, $n_D^{20}$ |
|---|---|---|---|---|---|---|---|---|
| 18 | 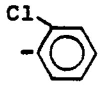 | $-OC_2H_5$ | $-C_2H_5$ | H | 3-Cl | H | 1 | 1,5529 |
| 19 | 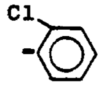 | $-OC_2H_5$ | $-C_2H_5$ | H | 3-Cl | 4-Cl | 1 | 1,5585 |
| 20 | 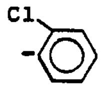 | $-CH_3$ | $-C_2H_5$ | H | 3-Cl | 4-Cl | 1 | Öl |
| 21 | 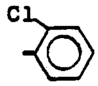 | $-OC_2H_5$ | $-C_2H_5$ | $-CH_3$ | 4-Cl | H | 1 | 1,5781 |
| 22 | 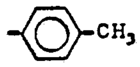 | $-OC_2H_5$ | $-C_2H_5$ | H | 4-Cl | H | 1 | 1,5521 |
| 23 | 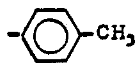 | $-OC_2H_5$ | $-C_2H_5$ | H | 3-Cl | H | 1 | 1,5515 |
| 24 | 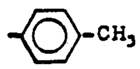 | $-CH_3$ | $-C_2H_5$ | H | 3-Cl | H | 1 | Öl |
| 25 | 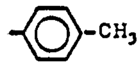 | $-OC_2H_5$ | $-C_2H_5$ | H | 3-Cl | 4-Cl | 1 | 1,5583 |
| 26 | 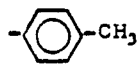 | $-OC_2H_5$ | $-C_2H_5$ | H | $4-CH_3$ | H | 1 | 1,5440 |
| 27 | 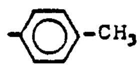 | $-OC_2H_5$ | $-C_2H_5$ | H | 4-Cl | $2-CH_3$ | 1 | 1,5499 |
| 28 | 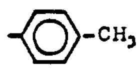 | $-OC_2H_5$ | $-C_2H_5$ | $-CH_3$ | 4-Cl | H | 1 | 1,5103 |
| 29 | 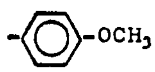 | $-OC_2H_5$ | $-C_2H_5$ | H | 4-Cl | H | 1 | 1,5595 |
| 30 | 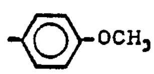 | $-OC_2H_5$ | $-C_2H_5$ | H | 3-Cl | H | 1 | 1,5605 |
| 31 | 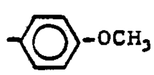 | $-OC_2H_5$ | $-C_2H_5$ | H | 3-Cl | 4-Cl | 1 | 1,5659 |
| 32 | 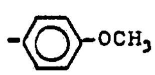 | $-OC_2H_5$ | $-C_2H_5$ | $-CH_3$ | 4-Cl | H | 1 | 1,5009 |
| 33 | 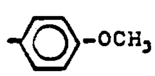 | $-OCH_3$ | $-CH_3$ | $-CH_3$ | 4-Cl | H | 1 | Öl |
| 34 | 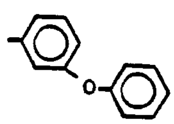 | $-OC_2H_5$ | $-C_2H_5$ | H | 4-Cl | H | 1 | 1,5684 |
| 35 | 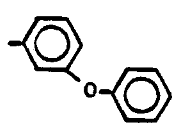 | $-OC_2H_5$ | $-C_2H_5$ | H | 3-Cl | H | 1 | Öl |

| Bsp. Nr. | $R^1$ | $R^2$ | $R^3$ | $R^4$ | $R^5$ | $R^6$ | n | Fp, $n_D^{20}$ |
|---|---|---|---|---|---|---|---|---|
| 36 | 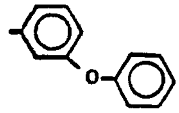 | $-OC_2H_5$ | $-C_2H_5$ | H | 3-Cl | 4-Cl | 1 | Öl |
| 37 | 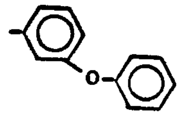 | $-OC_2H_5$ | $-C_2H_5$ | $-CH_3$ | 4-Cl | H | 1 | 1,5958 |
| 38 | 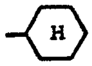 | $-OC_2H_5$ | $-C_2H_5$ | $-CH_3$ | 4-Cl | H | 1 | 1,6024 |
| 39 | 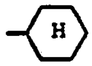 | $-OC_2H_5$ | $-C_2H_5$ | H | 3-Cl | H | 1 | 48° C |
| 40 | $-CH_3$ | $-OC_2H_5$ | $-C_2H_5$ | H | 4-Cl | H | 1 | 1,5145 |
| 41 | $-CH_3$ | $-OC_2H_5$ | $-C_2H_5$ | H | 4-Cl | H | 3 | Öl |
| 42 | $-CH_3$ | $-OC_2H_5$ | $-C_2H_5$ | H | 2-Cl | 4-Cl | 1 | 95-97° C |
| 43 | $-CH_3$ | $-OC_2H_5$ | $-C_2H_5$ | H | 3-Cl | 4-Cl | 1 | 1,5245 |
| 44 | $-CH_3$ | $-OC_2H_5$ | $-C_2H_5$ | H | 3-Cl | H | 1 | 1,5138 |
| 45 | $-CH_3$ | $-OC_2H_5$ | $-C_2H_5$ | $-CH_3$ | 4-Cl | H | 1 | 1,4793 |
| 46 | $-C_2H_5$ | $-OC_2H_5$ | $-C_2H_5$ | H | 4-Cl | H | 1 | 1,5151 |
| 47 | $-C_2H_5$ | $-OC_2H_5$ | $-C_2H_5$ | H | 3-Cl | H | 1 | 1,5155 |
| 48 | $-C_2H_5$ | $-OC_2H_5$ | $-C_2H_5$ | $-CH_3$ | 4-Cl | H | 1 | 1,5204 |
| 49 | $-C_2H_5$ | $-OC_2H_5$ | $-C_2H_5$ | H | 3-Cl | 4-Cl | 1 | 1,5243 |
| 50 | $-CH(CH_3)_2$ | $-OC_2H_5$ | $-C_2H_5$ | H | 4-Cl | H | 1 | 1,5118 |
| 51 | $-CH(CH_3)_2$ | $-OC_2H_5$ | $-C_2H_5$ | H | $4-CH_3$ | H | 1 | 1,5842 |
| 52 | $-CH(CH_3)_2$ | $-OC_2H_5$ | $-C_2H_5$ | $-CH_3$ | 4-Cl | H | 1 | 1,5406 |
| 53 | $-C_5H_{11}$ | $-OC_2H_5$ | $-C_2H_5$ | H | $4-CH_3$ | H | 1 | 1,5842 |
| 54 | $-C_5H_{11}$ | $-OC_2H_5$ | $-C_2H_5$ | H | 4-Cl | H | 1 | 1,5835 |
| 55 | $-C_5H_{11}$ | $-OC_2H_5$ | $-C_2H_5$ | H | 3-Cl | H | 1 | 1,5800 |
| 56 | 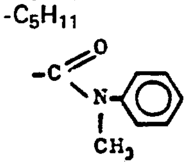 | $-OC_2H_5$ | $-C_2H_5$ | H | 4-Cl | H | 1 | 117° C |
| 57 | 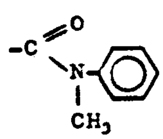 | $-OC_2H_5$ | $-C_2H_5$ | H | 2-Cl | 4-Cl | 1 | 1,5485 |
| 58 | 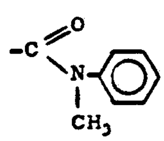 | $-OC_2H_5$ | $-C_2H_5$ | H | $2-CH_3$ | 4-Cl | 1 | 96-98° C |

## C. Biologische Beispiele

### Beispiel 1

Weizen wurde im Gewächshaus in Töpfen von 9 cm ∅ bis zum 3 - 4-Blattstadium herangezogen und dann mit dem Herbizid und den erfindungsgemäßen Verbindungen behandelt. Die Verbindungen wurden dabei in Form wäßriger Suspensionen bzw. Emulsionen in Form einer Tankmischung mit einer Wasseraufwandmenge von umgerechnet 800 l/ha ausgebracht. 3 Wochen nach der Behandlung wurden die Pflanzen auf jede Art von Schädigung durch die ausgebrachten Herbizide bonitiert, wobei insbesondere das Ausmaß der anhaltenden Wachstumshemmung berücksichtigt wurde.

Die Ergebnisse aus Tabelle 1 veranschaulichen die hohe Antidotwirkung der erfindungsgemäßen Verbindungen.

**Tabelle 1**

| Herbizid/Antidot-Kombination | Dosis kg a.i./ha | herbizide Wirkung in % TA |
|---|---|---|
| $H_1$ | 2 | 80 |
| $H_1$ + Vbg. von Bsp. 34 | 2 + 2,5 | 20 |
| $H_1$ + " " " 1 | 2 + 2,5 | 22 |
| $H_1$ + " " " 5 | 2 + 2,5 | 30 |
| $H_1$ + " " " 3 | 2 + 2,5 | 40 |
| $H_1$ + " " " 43 | 2 + 2,5 | 35 |
| $H_1$ + " " " 4 | 2 + 2,5 | 40 |
| $H_1$ + " " " 10 | 2 + 2,5 | 55 |
| $H_1$ + " " " 9 | 2 + 2,5 | 20 |
| $H_1$ + " " " 7 | 2 + 2,5 | 65 |
| $H_1$ + " " " 6 | 2 + 2,5 | 45 |
| $H_1$ + " " " 25 | 2 + 2,5 | 30 |
| $H_1$ + " " " 29 | 2 + 2,5 | 30 |
| $H_1$ + " " " 23 | 2 + 2,5 | 30 |
| $H_1$ + " " " 22 | 2 + 2,5 | 25 |
| $H_1$ + " " " 19 | 2 + 2,5 | 40 |
| $H_1$ + " " " 17 | 2 + 2,5 | 30 |
| $H_1$ + " " " 11 | 2 + 2,5 | 55 |
| $H_1$ + " " " 46 | 2 + 2,5 | 40 |
| $H_1$ + " " " 31 | 2 + 2,5 | 30 |
| $H_1$ + " " " 30 | 2 + 2,5 | 40 |
| $H_1$ + " " " 14 | 2 + 2,5 | 40 |
| $H_1$ + " " " 2 | 2 + 2,5 | 50 |
| $H_1$ + " " " 51 | 2 + 2,5 | 60 |
| $H_1$ + " " " 49 | 2 + 2,5 | 40 |
| $H_1$ + " " " 35 | 2 + 2,5 | 60 |
| $H_1$ + " " " 39 | 2 + 2,5 | 50 |
| $H_1$ + " " " 36 | 2 + 2,5 | 40 |
| $H_1$ + " " " 12 | 2 + 2,5 | 50 |
| $H_1$ + " " " 21 | 2 + 2,5 | 60 |
| $H_1$ + " " " 55 | 2 + 2,5 | 65 |
| $H_1$ + " " " 54 | 2 + 2,5 | 40 |
| $H_1$ + " " " 32 | 2 + 2,5 | 45 |
| $H_1$ + " " " 45 | 2 + 2,5 | 55 |
| $H_1$ + " " " 44 | 2 + 2,5 | 45 |

Abkürzungen:
$H_1$ = Fenoxaprop-ethyl = (2-[4-(6-Chlorbenzoxazol-2-yl-oxy)-phenoxy]-propionsäureethylester)
TA = Triticum aestivum
a.i. = Aktivsubstanz

**Beispiel 2**

Maispflanzen wurden wie in Beispiel 1 angezogen und mit Herbizid und den erfindungsgemäßen Verbindungen, wie oben beschrieben, behandelt. Nach 3 Wochen erfolgte die optische Bonitur der Maispflanzenschädigung.

Die Boniturergebnisse sind in Tabelle 2 zusammengefaßt. Die erfindungsgemäßen Verbindungen sind demnach in der Lage, einen durch Herbizidanwendung verursachten Schaden wirksam zu reduzieren.

**Tabelle 2**

| Herbizid/Antidot-Kombination | Dosis kg a.i./ha | herbizide Wirkung in % ZM |
|---|---|---|
| $H_2$ | 0,4 | 95 |
| $H_2$ + Vbg. von Bsp. 1 | 0,4 + 2,5 | 35 |
| $H_2$ + " " " 5 | 0,4 + 2,5 | 70 |
| $H_2$ + " " " 3 | 0,4 + 2,5 | 60 |
| $H_2$ + " " " 43 | 0,4 + 2,5 | 40 |
| $H_2$ + " " " 40 | 0,4 + 2,5 | 20 |
| $H_2$ + " " " 9 | 0,4 + 2,5 | 40 |
| $H_2$ + " " " 6 | 0,4 + 2,5 | 40 |
| $H_2$ + " " " 25 | 0,4 + 2,5 | 60 |
| $H_2$ + " " " 29 | 0,4 + 2,5 | 30 |
| $H_2$ + " " " 22 | 0,4 + 2,5 | 35 |
| $H_2$ + " " " 19 | 0,4 + 2,5 | 60 |
| $H_2$ + " " " 18 | 0,4 + 2,5 | 50 |
| $H_2$ + " " " 17 | 0,4 + 2,5 | 25 |
| $H_2$ + " " " 11 | 0,4 + 2,5 | 50 |
| $H_2$ + " " " 46 | 0,4 + 2,5 | 20 |
| $H_2$ + " " " 31 | 0,4 + 2,5 | 40 |
| $H_2$ + " " " 30 | 0,4 + 2,5 | 40 |
| $H_2$ + " " " 14 | 0,4 + 2,5 | 35 |
| $H_2$ + " " " 47 | 0,4 + 2,5 | 60 |
| $H_2$ + " " " 28 | 0,4 + 2,5 | 50 |
| $H_2$ + " " " 37 | 0,4 + 2,5 | 35 |
| $H_2$ + " " " 48 | 0,4 + 2,5 | 60 |
| $H_2$ + " " " 36 | 0,4 + 2,5 | 40 |
| $H_2$ + " " " 50 | 0,4 + 2,5 | 30 |

Abkürzungen:
$H_2$ = Diclofopmethyl (2-[4-(2,4-Dichlorphenoxy)-phenoxy]-propionsäuremethylester)
ZM = Zea mays

**Patentansprüche** für die Vertragsstaaten BE, CH, DE, FR, GB, IT, LI, NL

1. Verbindungen der Formel I

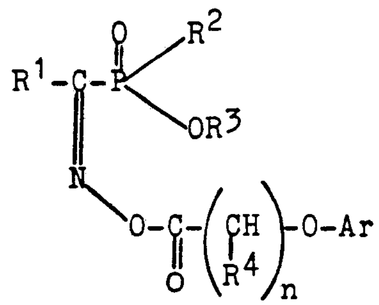

(I),

worin

$R^1$ ($C_1$-$C_8$)Alkyl, ($C_2$-$C_8$)Alkenyl, ($C_2$-$C_8$)Alkinyl, ($C_5$-$C_8$)-Cycloalkyl, Phenyl, Naphthyl, wobei der Alkyl-, Alkenyl-, Alkinyl-, Cycloalkyl-, Phenyl- oder Naphthylrest ein oder mehrfach durch Halogen, ($C_1$-$C_4$)Alkoxy, ($C_1$-$C_4$)Alkyl, Nitro, $CF_3$, Nitril, ($C_1$-$C_4$-Alkoxy)-carbonyl, gegebenenfalls durch ($C_1$-$C_4$)Alkyl und/oder Phenyl substituiertes Carbamoyl, ($C_1$-$C_6$-Alkyl)-carbonyl ($C_1$-$C_6$-Alkyl)-carbonylamino, Benzoylamino, Di-($C_1$-$C_4$)-Alkylamino oder durch einen gegebenenfalls ein- oder mehrfach durch Halogen, ($C_1$-$C_4$)Alkoxy, ($C_1$-$C_4$)Alkyl, Nitro, $CF_3$ oder Nitril substituierten Phenyl- oder Phenoxyrest substituiert sein kann,
($C_1$-$C_4$-Alkoxy)-carbonyl oder einen gegebenenfalls durch ($C_1$-$C_4$)Alkyl oder Phenyl substituierten

Carbamoylrest,

$R^2$ ($C_1$-$C_4$)-Alkyl, ($C_1$-$C_4$)-Alkoxy oder Phenyl,

$R^3$ ($C_1$-$C_4$)-Alkyl,

$R^4$ H oder ($C_1$-$C_3$)-Alkyl,

Ar einen Phenyl-, Naphthyl- oder Chinolylrest, der jeweils bis zu dreifach durch Halogen und/oder ein- oder zweifach durch $CF_3$, ($C_1$-$C_4$)-Alkyl, ($C_1$-$C_4$)-Alkoxy, CN, $NO_2$, ($C_1$-$C_6$)-Alkylcarbonyl oder Benzoyl substituiert sein kann, und

n 1, 2, 3 oder 4 bedeuten.

2. Verbindung der Formel I von Anspruch 1, dadurch gekennzeichnet, daß

$R^1$ ($C_1$-$C_8$)Alkyl oder Phenyl, die jeweils wie in Anspruch geben substituiert sein können,

$R^2$ ($C_1$-$C_4$)-Alkoxy,

$R^4$ H oder Methyl,

Ar Phenyl, das durch ein bis drei Halogenatome substituiert sein kann, und

n 1 bedeuten.

3. Verfahren zur Herstellung von Verbindungen der Formel I, dadurch gekennzeichnet, daß man

a) eine Verbindung der Formel II

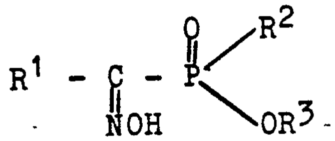

(II),

mit einer Verbindung der Formel III

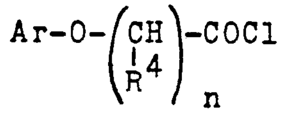

(III),

in Gegenwart einer Hilfsbase oder

b) eine Verbindung der Formel II mit einer Verbindungen der Formel IV

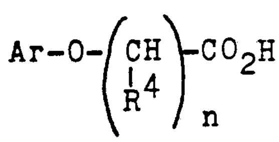

(IV)

in Gegenwart eines Kondensationsmittels umsetzt.

4. Pflanzenschützende Mittel, dadurch gekennzeichnet, daß sie zur Reduzierung von phytotoxischen Nebenwirkungen von Herbiziden eine wirksame Menge einer Verbindung der Formel I enthalten.

5. Mittel gemäß Anspruch 4, dadurch gekennzeichnet, daß sie in Kombination mit einer Verbindung der Formel I zusätzlich ein Herbizid aus der Gruppe der Thiolcarbamate, Carbamate, Halogenacetanilide, Phenoxy-, Naphthoxy-, Phenoxyphenoxy- oder Heteroaryloxyphenoxy-carbonsäureester oder Dimedonoximderivate enthalten.

6. Verfahren zum Schutz von Kulturpflanzen gegen phytotoxische Nebenwirkungen von Herbiziden, dadurch gekennzeichnet, daß man die Pflanzen, Pflanzensamen oder Anbauflächen mit einer wirksamen Menge einer Verbindung der Formel I vor, nach oder gleichzeitig mit dem Herbizid behandelt.

7. Verfahren gemäß Anspruch 6, dadurch gekennzeichnet, daß man als Herbizid ein Thiolcarbamat, Carbamat, Halogenacetanilid, Phenoxy-, Naphthoxy-, Phenoxyphenoxy- oder Heteroaryloxyphenoxy-carbonsäureester oder ein Dimedonoximderivat einsetzt.

8. Verwendung von Verbindungen der Formel I zum Schutz von Kulturpflanzen gegen phytotoxische Nebenwirkungen von Herbiziden.

**Patentansprüche** für den Vertragsstaat AT

1. Pflanzenschützende Mittel zur Reduktion von phytotoxischen Nebenwirkungen von Herbiziden gegenüber Kulturpflanzen, dadurch gekennzeichnet, daß sie eine wirksame Menge Verbindung der Formel I

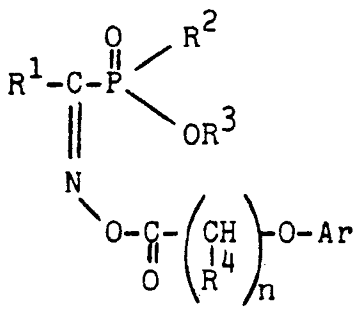

(I),

worin

R¹ $(C_1-C_8)$Alkyl, $(C_2-C_8)$Alkenyl, $(C_2-C_8)$Alkinyl, $(C_5-C_8)$-Cycloalkyl, Phenyl, Naphthyl, wobei der Alkyl-, Alkenyl-, Alkinyl-, Cycloalkyl-, Phenyl- oder Naphthylrest ein oder mehrfach durch Halogen, $(C_1-C_4)$Alkoxy, $(C_1-C_4)$Alkyl, Nitro, $CF_3$, Nitril, $(C_1-C_4$-Alkoxy)-carbonyl, gegebenenfalls durch $(C_1-C_4)$Alkyl und/oder Phenyl substituiertes Carbamoyl, $(C_1-C_6$-Alkyl)-carbonyl, $(C_1-C_6$-Alkyl)-carbonylamino, Benzoylamino, Di-$(C_1-C_4)$-Alkylamino oder durch einen gegebenenfalls ein- oder mehrfach durch Halogen, $(C_1-C_4)$Alkoxy, $(C_1-C_4)$Alkyl, Nitro, $CF_3$ oder Nitril substituierten Phenyl- oder Phenoxyrest substituiert sein kann, $(C_1-C_4$-Alkoxy)-carbonyl oder einen gegebenenfalls durch $(C_1-C_4)$Alkyl oder Phenyl substituierten Carbamoylrest.

R² $(C_1-C_4)$-Alkyl, $(C_1-C_4)$-Alkoxy oder Phenyl,
R³ $(C_1-C_4)$-Alkyl,
R⁴ H oder $(C_1-C_3)$-Alkyl,
Ar einen Phenyl-, Naphthyl- oder Chinolylrest, der jeweils bis zu dreifach durch Halogen und/oder ein- oder zweifach durch $CF_3$, $(C_1-C_4)$-Alkyl, $(C_1-C_4)$-Alkoxy, CN, $NO_2$, $(C_1-C_6)$-Alkylcarbonyl oder Benzoyl substituiert sein kann, und
n 1, 2, 3 oder 4 bedeuten, enthalten.

2. Pflanzenschützende Mittel gemäß Anspruch 1, dadurch gekennzeichnet, daß in Formel I von Anspruch 1
R¹ = $(C_1-C_8)$Alkyl oder Phenyl, die jeweils wie oben angegeben substituiert sein können,
R² = $(C_1-C_4)$-Alkoxy,
R⁴ = H oder Methyl,
Ar = Phenyl, das durch ein bis drei Halogenatome substituiert sein kann, und
n = 1 bedeuten.

3. Verfahren zur Herstellung von Verbindungen der Formel I von Anspruch 1, dadurch gekennzeichnet, daß man
a) eine Verbindung der Formel II

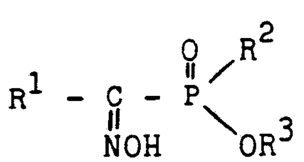

(II),

mit einer Verbindung der Formel III

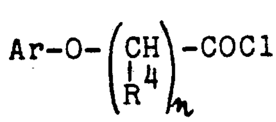

(III),

in Gegenwart einer Hilfsbase oder
b) eine Verbindung der Formel II mit einer Verbindung der Formel IV

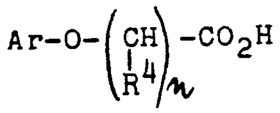

(IV)

in Gegenwart eines Kondensationsmittels umsetzt.

4. Mittel gemäß Anspruch 1, dadurch gekennzeichnet, daß sie in Kombination mit einer Verbindung der Formel zusätzlich ein Herbizid aus der Gruppe der Thiolcarbamate, Carbamate, Halogenacetanilide, Phenoxy-, Naphthoxy-, Phenoxyphenoxy- oder Heteroaryloxyphenoxycarbonsäureester oder ein Dimedonoximderivat enthalten.

5. Verfahren zum Schutz von Kulturpflanzen gegen phytotoxische Nebenwirkungen von Herbiziden, dadurch gekennzeichnet, daß man die Pflanzen, Pflanzensamen oder Anbauflächen mit einer wirksamen Menge einer Verbindung der Formel I von Anspruch 1, nach oder gleichzeitig mit dem Herbizid behandelt.

6. Verfahren gemäß Anspruch 5, dadurch gekennzeichnet, daß man als Herbizid ein Thiolcarbamat, Carbamat, Halogenacetanilid, Phenoxy-, Naphthoxy-, Phenoxyphenoxy- oder Heteroaryloxyphenoxycarbonsäureester oder ein Dimedonoximderivat einsetzt.

7. Verwendung von Verbindungen der Formel I von Anspruch 1 zum Schutz von Kulturpflanzen gegen phytotoxische Nebenwirkungen von Herbiziden.

**Claims** for the Contracting States BE, CH, DE, FR, GB, IT, LI, NL

1. A compound of the formula I

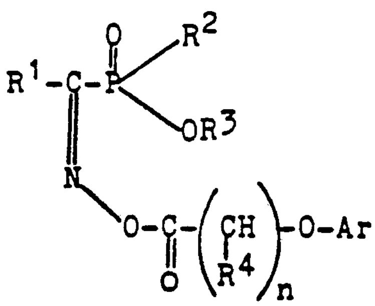

(I)

in which

$R^1$ denotes $(C_1-C_8)$alkyl, $(C_2-C_8)$alkenyl, $(C_2-C_8)$-alkinyl, $(C_5-C_8)$cycloalkyl, phenyl or naphthyl, it being possible for the alkyl, alkenyl, alkinyl, cycloalkyl, phenyl or naphthyl radical to be monosubstituted or polysubstituted by halogen, $(C_1-C_4)$alkoxy, $(C_1-C_4)$alkyl, nitro, $CF_3$, nitrile, $(C_1-C_4$-alkoxy)-carbonyl, carbamyl which is optionally substituted by $(C_1-C_4)$alkyl and/or phenyl, $(C_1-C_6$-alkyl)-carbonyl, $(C_1-C_6$alkyl)-carbonylamino, benzoylamino or di-$(C_1-C_4)$-alkylamino, or by a phenyl or phenoxy radical which is optionally monosubstituted or polysubstituted by halogen, $(C_1-C_4)$alkoxy, $(C_1-C_4)$-alkyl, nitro, $CF_3$ or nitrile, or denotes $(C_1-C_4$-alkoxy)-carbonyl, or a carbamyl radical which is optionally substituted by $(C_1-C_4)$alkyl or phenyl,

$R^2$ denotes $(C_1-C_4)$-alkyl, $(C_1-C_4)$-alkoxy or phenyl,

$R^3$ denotes $(C_1-C_4)$-alkyl,

$R^4$ denotes H or $(C_1-C_3)$-alkyl,

Ar denotes a phenyl, naphthyl or quinolyl radical, each of which can be mono- di- or tri-substituted by halogen and/or mono- or di-substituted by $CF_3$, $(C_1-C_4)$-alkyl, $(C_1-C_4)$-alkoxy, CN, $NO_2$, $(C_1-C_6$-alkyl)-carbonyl or benzoyl, and

n denotes 1, 2, 3 or 4.

2. A compound of the formula I as claimed in claim 1, in which

$R^1$ denotes $(C_1-C_8)$alkyl or phenyl, each of which can be substituted as stated in claim 1,

$R^2$ denotes $(C_1-C_4)$-alkoxy,

$R^4$ denotes H or methyl,

Ar denotes phenyl, which can be substituted by one to three halogen atoms, and
n denotes 1.

3. A process for the preparation of a compound of the formula I, which comprises
a) reacting a compound of the formula II

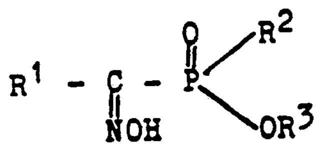

(II)

with a compound of the formula III

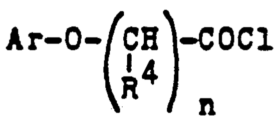

(III)

in the presence of an auxiliary base, or
b) reacting a compound of the formula II with a compound of the formula IV

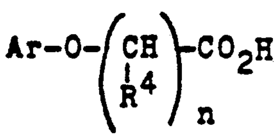

(IV)

in the presence of a condensing agent.

4. A plant protection agent, which contains an effective amount of a compound of the formula I for reducing the phytotoxic side effects of herbicides.

5. An agent as claimed in claim 4, which, in combination with a compound of the formula I, additionally contains a herbicide from the group comprising thiolcarbamates, carbamates, halogenoacetanilides, phenoxy-, naphthoxy-, phenoxyphenoxy- and heteroaryloxyphenoxycarboxylic acid esters and dimedone oxime derivatives.

6. A method of protecting crop plants from the phytotoxic side effects of herbicides, which comprises treating the plants, plant seeds or areas to be cultivated with an effective amount of a compound of the formula I before, after or at the same time as with the herbicide.

7. The method as claimed in claim 6, wherein a thiolcarbamate, carbamate, halogenoacetanilide, phenoxy-, naphthoxy-, phenoxyphenoxy- or heteroaryloxyphenoxycarboxylic acid ester or dimedone oxime derivative is employed as the herbicide.

8. The use of a compound of the formula I for protecting crop plants from the phytotoxic side effects of herbicides.

**Claims** for the contract state AT

1. A plant-protection agent for reducing the phytotoxic side-effects of herbicides on crop plants, which contains an effective amount of a compound of the formula I

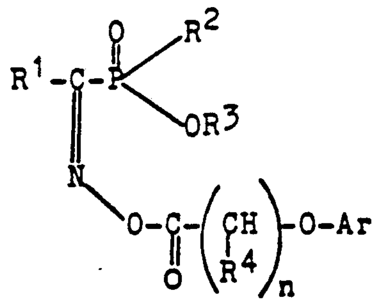

(I)

in which

R¹ denotes $(C_1-C_8)$alkyl, $(C_2-C_8)$alkenyl, $(C_2-C_8)$-alkinyl, $(C_5-C_8)$cycloalkyl, phenyl or naphthyl, it being possible for the alkyl, alkenyl, alkinyl, cycloalkyl, phenyl or naphthyl radical to be monosubstituted or polysubstituted by halogen, $(C_1-C_4)$alkoxy, $(C_1-C_4)$alkyl, nitro, $CF_3$, nitrile, $(C_1-C_4$-alkoxy)-carbonyl, carbamyl which is optionally substituted by $(C_1-C_4)$alkyl and/or phenyl, $(C_1-C_6$-alkyl)-carbonyl, $(C_1-C_6$alkyl)-carbonylamino, benzoylamino or di-$(C_1-C_4)$-alkylamino, or by a phenyl or phenoxy radical which is optionally monosubstituted or polysubstituted by halogen, $(C_1-C_4)$alkoxy, $(C_1-C_4)$-alkyl, nitro, $CF_3$ or nitrile, or denotes $(C_1-C_4$-alkoxy)-carbonyl, or a carbamyl radical which is optionally substituted by $(C_1-C_4)$alkyl or phenyl,

$R^2$ denotes $(C_1-C_4)$-alkyl, $(C_1-C_4)$-alkoxy or phenyl,

$R^3$ denotes $(C_1-C_4)$-alkyl,

$R^4$ denotes H or $(C_1-C_3)$-alkyl,

Ar denotes a phenyl, naphthyl or quinolyl radical, each of which can be mono-, di- or tri-substituted by halogen and/or mono- or di-substituted by $CF_3$, $(C_1-C_4)$-alkyl, $(C_1-C_4)$-alkoxy, CN, $NO_2$, $(C_1-C_6$-alkyl)-carbonyl or benzoyl, and

n denotes 1, 2, 3 or 4.

2. A plant protection agent as claimed in claim 1, wherein, in formula I of claim 1,

$R^1$ denotes $(C_1-C_8)$alkyl or phenyl, each of which can be substituted as stated in claim 1,

$R^2$ denotes $(C_1-C_4)$-alkoxy,

$R^4$ denotes H or methyl,

Ar denotes phenyl, which can be substituted by one to three halogen atoms, and

n denotes 1.

3. A process for the preparation of a compound of the formula I of claim 1, which comprises

a) reacting a compound of the formula II

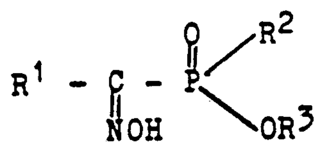

(II)

with a compound of the formula III

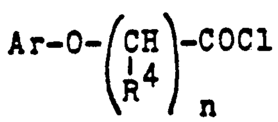

(III)

in the presence of an auxiliary base, or

b) reacting a compound of the formula II with a compound of the formula IV

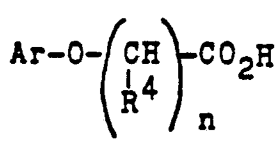

(IV)

in the presence of a condensing agent.

4. An agent as claimed in claim 1, which, in combination with a compound of the formula I, additionally contains a herbicide from the group comprising thiolcarbamates, carbamates, halogenoacetanilides,

phenoxy-, naphthoxy-, phenoxyphenoxy- and heteroaryloxyphenoxycarboxylic acid esters and dimedone oxime derivatives.

5. A method of protecting crop plants from the phytotoxic side effects of herbicides, which comprises treating the plants, plant seeds or areas to be cultivated with an effective amount of a compound of the formula I of claim 1, after or at the same time as with the herbicide.

6. The method as claimed in claim 5, wherein a thiolcarbamate, carbamate, halogenoacetanilide, phenoxy-, naphthoxy-, phenoxyphenoxy- or heteroaryloxyphenoxycarboxylic acid ester or dimedone oxime derivative is employed as the herbicide.

7. The use of a compound of the formula I of claim 1 for protecting crop plants from the phytotoxic side effects of herbicides.

**Revendications** pour les états contractants BE, CH, DE, FR, GB, IT, LI, NL

1. Composés répondant à la formule I:

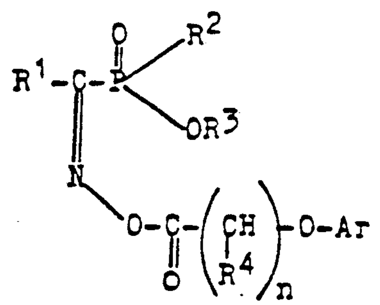

(I)

dans laquelle

$R^1$ représente un alkyle en $C_1$-$C_8$, un alcényle en $C_2$-$C_8$, un alcynyle en $C_2$-$C_8$, un cycloalkyle en $C_5$-$C_8$, un phényle ou un naphtyle, chacun de ces radicaux alkyles, alcényles, alcynyles, cycloalkyles, phényles et naphtyles pouvant porter un ou plusieurs substituants pris dans l'ensemble constitué par les halogènes, les alcoxy en $C_1$-$C_4$, les alkyles en $C_1$-$C_4$, le nitro, $-CF_3$, le cyano, les (alcoxy-$C_1$-$C_4$)-carbonyles, les carbamoyles éventuellement porteurs d'un alkyle en $C_1$-$C_4$ et/ou d'un phényle, les (alkyl-$C_1$-$C_6$)-carbonyles, les (alkyl-$C_1$-$C_6$)-carbonylamino, le benzoylamino, les di-(alkyl-$C_1$-$C_4$)-amino et les radicaux phényles et phénoxy éventuellement porteurs d'un ou plusieurs substituants pris dans l'ensemble constitué par les halogénes, les alcoxy en $C_1$-$C_4$, les alkyles en $C_1$-$C_4$, le nitro, $-CF_3$ et le cyano, ou $R^1$ représente un (alcoxy-$C_1$-$C_4$)-carbonyle ou un carbamoyle éventuellement porteur d'un alkyle en $C_1$-$C_4$ ou d'un phényle,

$R^2$ représente un alkyle en $C_1$-$C_4$, un alcoxy en $C_1$-$C_4$ ou un phényle,

$R^3$ représente un alkyle en $C_1$-$C_4$,

$R^4$ représente H ou un alkyle en $C_1$-$C_3$,

Ar représente un radical phényle, un radical naphtyle ou un radical quinolyle, chacun de ces radicaux pouvant porter jusqu'à 3 atomes d'halogènes et/ou un ou deux substituants pris dans l'ensemble constitué par $-CF_3$, les alkyles en $C_1$-$C_4$, les alcoxy en $C_1$-$C_4$, -CN, $-NO_2$, les (alkyl-$C_1$-$C_6$)-carbonyles et le benzoyle, et

n est égal à 1, à 2, à 3 ou à 4.

2. Composés de formule I selon la revendication 1, caractérisés en ce que:

$R^1$ représente un alkyle en $C_1$-$C_8$ ou un phényle, chacun de ces radicaux pouvant être substitué comme indiqué à la revendication 1,

$R^2$ représente un alcoxy en $C_1$-$C_4$,

$R^4$ représente H ou un méthyle,

Ar représente un phényle qui peut porter de 1 à 3 atomes d'halogènes, et

n est égal à 1.

3. Procédé pour préparer des composés de formule I, caractérisé en ce qu'on fait réagir:
un composé de formule II:

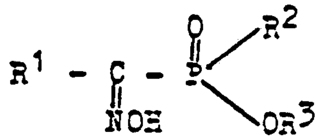

(II)

avec un composé de formule III:

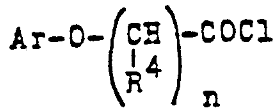

(III)

en présence d'une base auxiliaire, ou

b) un composé de formule II avec un compose de formule IV:

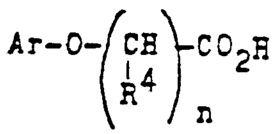

(IV)

en présence d'un agent de condensation.

4. Produits phytosanitaires caractérisés en ce qu'ils contiennent une quantité d'un composé de formule I suffisante pour diminuer les effets secondaires phytotoxiques d'herbicides.

5. Produits selon la revendication 4 caractérisés en ce qu'en plus d'un composé de formule I ils contiennent un herbicide appartenant au groupe des thiocarbamates, des carbamates, des halogéno-acétanilides, des esters d'acides phénoxy-, naphtyloxy-, phénoxy-phénoxy- ou hétéroaryloxy-phénoxy-carboxyliques ou des dérivés de la dimédone-oxime.

6. Procédé pour protéger des plantes cultivées contre les effets secondaires phytotoxiques d'herbicides, procédé caractérisé en ce qu'on traite les plantes, les semences de plantes ou les surfaces de culture par une quantité efficace d'un composé de formule I, avant, après ou pendant le traitement par l'herbicide.

7. Procédé selon la revendication 6 caractérisé en ce qu'on utilise, comme herbicide, un thiocarbamate, un carbamate, un halogéno-acétanilide, un ester d'acide phénoxy-, napthyloxy, phénoxy-phénoxy- ou hétéroaryloxy-phénoxy-carboxylique ou un dérivé de la dimédone-oxime.

8. Application de composés de formule I à la protection de plantes cultivées contre les effets secondaires phytotoxiques d'herbicides.

**Revendications** pour l'état contractant AT

1. Produits phytosanitaires pour diminuer les effets secondaires d'herbicides sur des plantes cultivées, produits caractérisés en ce qu'ils contiennent une quantité efficace d'un composé répondant à la formule I:

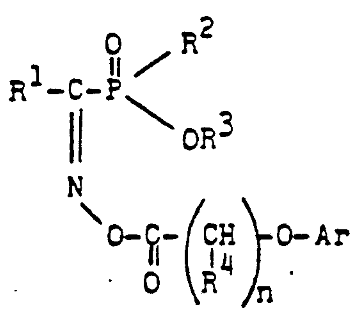

(I)

dans laquelle

$R^1$ représente un alkyle en $C_1$-$C_8$, un alcényle en $C_2$-$C_8$, un alcynyle en $C_2$-$C_8$, un cycloalkyle en $C_5$-$C_8$, un phényle ou un naphtyle, chacun de ces radicaux alkyles, alcényles, alcynyles, cycloalkyles, phényles et naphtyles pouvant porter un ou plusieurs substituants pris dans l'ensemble constitué par les halogènes, les alcoxy en $C_1$-$C_4$, les alkyles en $C_1$-$C_4$, le nitro, $-CF_3$, le cyano, les (alcoxy-$C_1$-$C_4$)-carbonyles, les carbamoyles éventuellement porteurs d'un alkyle en $C_1$-$C_4$ et/ou d'un phényle, les (alkyl-$C_1$-$C_6$)-carbonyles, les (alkyl-$C_1$-$C_6$)-carbonylamino, le benzoylamino, les di-(alkyl-$C_1$-$C_4$)-amino et les radicaux phényles et phénoxy éventuellement porteurs d'un ou plusieurs substituants pris dans l'ensemble constitué par les halogènes, les alcoxy en $C_1$-$C_4$, les alkyles en $C_1$-$C_4$, le nitro, $-CF_3$ et le cyano, ou $R^1$ représente un (alcoxy-$C_1$-$C_4$)-carbonyle ou un carbamoyle éventuellement porteur d'un alkyle en $C_1$-$C_4$ ou d'un phényle,

$R^2$ représente un alkyle en $C_1$-$C_4$, un alcoxy en $C_1$-$C_4$ ou un phényle,

$R^3$ représente un alkyle en $C_1$-$C_4$,

$R^4$ représente H ou un alkyle en $C_1$-$C_3$,

Ar représente un radical phényle, un radical naphtyle ou un radical quinolyle, chacun de ces radicaux pouvant porter jusqu'à 3 atomes d'halogènes et/ou un ou deux substituants pris dans l'ensemble constitué par $-CF_3$, les alkyles en $C_1$-$C_4$, les alcoxy en $C_1$-$C_4$, -CN, $-NO_2$, les (alkyl-$C_1$-$C_6$)-carbonyles et le benzoyle, et

n est égal à 1, à 2, à 3 ou à 4.

2. Produits phytosanitaires selon la revendication 1, caractérisés en ce que, dans la formule I de la revendication 1,

$R^1$ représente un alkyle en $C_1$-$C_8$ ou un phényle, chacun de ces radicaux pouvant être substitué comme indiqué ci-dessus,

$R^2$ représente un alcoxy en $C_1$-$C_4$,

$R^4$ représente H ou un méthyle,

Ar représente un phényle qui peut porter de 1 à 3 atomes d'halogènes, et

n est égal à 1.

3. Procédé de préparation de composés de formule I selon la revendication 1, procédé caractérisé en ce qu'on fait réagir:

a) un composé de formule II:

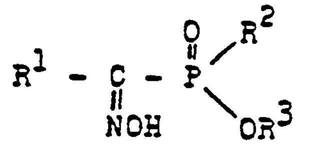

(II)

avec un composé de formule III:

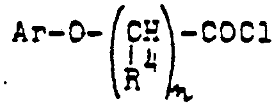

(III)

en présence d'une base auxiliaire, ou

b) un composé de formule II avec un composé de formule IV:

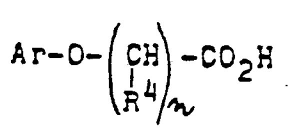

(IV)

en présence d'un agent de condensation.

4. Produits selon la revendication 1, caractérisés en ce qu'en plus d'un composé de formule I ils contiennent un herbicide appartenant au groupe des thiocarbamates, des carbamates, des halogéno-acétanilides, des esters d'acides phénoxy-, naphtyloxy-, phénoxy-phénoxy- ou hétéroaryloxy-phénoxy-carboxyliques ou des dérivés de la dimédone-oxime.

5. Procédé pour protéger des plantes cultivées contre les effets secondaires phytotoxiques d'herbicides, procédé caractérisé en ce qu'on traite les plantes, les semences de plantes ou les surfaces de culture par une quantité efficace d'un composé de formule I, avant, après ou pendant le traitement par l'herbicide.

6. Procédé selon la revendication 5, caractérisé en ce qu'on utilise, comme herbicide, un thiocarbamate, un carbamate, un halogéno-acétanilide, un ester d'acide phénoxy-, napthyloxy, phénoxy-phénoxy- ou hétéroaryloxy-phénoxy-carboxylique ou un dérivé de la dimédone-oxime.

7. L'application de composés de formule I selon la revendication 1 à la protection de plantes cultivées contre des effets secondaires phytotoxiques d'herbicides.